# FASCICULE DE BREVET EUROPEEN

(11) **EP 1 510 379 B1**
(45) Date de publication et mention de la délivrance du brevet: **31.01.2007**
(21) Numéro de dépôt: 04020378.8
(22) Date de dépôt: 27.08.2004
(51) Int. Cl.: B60H 1/00

(54) **Module de distribution d'air pour une installation de ventilation, chauffage et/ou climatisation d'habitacle**
Luftverteilungsmodul für eine Heiz-Lüftungs- oder Klimaanlage eines Fahrgastraumes
Air distribution module for an air conditioning system of a passenger compartment

(30) Priorité: 29.08.2003 FR 0310319
(43) Date de publication de la demande: 02.03.2005
(73) Titulaire: VALEO SYSTEMES THERMIQUES, 78321 Le Mesnil St Denis Cedex (FR)
(72) Inventeur: Pouysegur, Serge, 78610 Le Perray en Yvelines (FR); Elliot, Gilles, 91080 Courcouronnes (FR)

(56) Documents cités:
- EP-B- 0 266 230
- EP-B- 0 691 228
- EP-B- 0 773 121
- EP-B- 0 927 107
- US-A- 5 399 120

## Description

L'invention concerne le domaine des installations de ventilation, chauffage et/ou climatisation d'habitacle, notamment de véhicule automobile.

Elle concerne plus particulièrement les installations de ventilation, chauffage et/ou climatisation d'habitacle comprenant un module de traitement d'air (ou module thermique), chargé de délivrer de l'air traité, et au moins un module de distribution d'air, chargé de répartir le flux d'air traité délivré par le module de traitement d'air entre des conduits alimentant des bouches de distribution telles que des bouches de dégivrage, des bouches d'aération ou des bouches d'alimentation "pieds". De telles installations sont notamment connues du document EP-B-O 691 228.

On entend ici par "air traité", de l'air froid produit par un échangeur de chaleur froid, ou de l'air chaud produit par un échangeur de chaleur chaud, ou encore de l'air mélangé (ou mixé) résultant d'un mélange entre de l'air froid produit par un échangeur de chaleur froid et de l'air chaud produit par un échangeur de chaleur chaud.

Du fait de leur architecture les installations du type précité n'apportent pas une entière satisfaction, notamment en terme de gestion des températures respectives des différents flux d'air qui alimentent les différents conduits. Notamment, il est assez difficile, voire impossible d'obtenir une différence de température importante (ou effet dit "bilevel") entre les bouches d'alimentation pieds et les bouches d'aération.

En outre, les installations précitées ne sont pas suffisamment adaptables aux changements de versions ou de plate-forme.

L'invention a donc pour but d'améliorer la situation.

Elle propose à cet effet un dispositif de distribution d'air, pour une installation modulaire de ventilation, chauffage et/ou climatisation d'un habitacle, notamment de véhicule automobile, réalisée sous la forme d'un module, comprenant un boîtier muni, d'une première part, d'au moins deux entrées d'air destinées à être alimentées en flux d'air par au moins un dispositif de traitement d'air de l'installation, d'une deuxième part, d'au moins une sortie de distribution d'air, alimentant des conduits de distribution, et d'une troisième part, de moyens de distribution chargés de répartir les flux d'air reçus entre les sorties de distribution d'air.

L'invention concerne un dispositif de distribution d'air pour une installation modulaire de ventilation, chauffage et/ou climatisation d'un habitacle, par exemple de véhicule automobile, lequel se compose de modules indépendants les uns des autres réalisant les diverses fonctions propres à une installation de ventilation, chauffage et/ou climatisation d'un habitacle groupés comprenant :
- au moins un module de ventilation agencé pour produire un flux d'air pulsé ;
- un module thermique comportant une entrée d'air pour l'air pulsé, des échangeurs thermiques propres à être traversés par le flux d'air et au moins une sortie d'air; et
- au moins un module de distribution ayant une entrée reliée à une sortie d'air du module thermique et comportant des moyens de distribution pour répartir le flux d'air entre des sorties d'air débouchant en des régions choisies de l'habitacle.

Le dispositif selon l'invention peut se décliner selon de nombreuses variantes, dont certaines au moins des caractéristiques peuvent être combinées entre-elles, et notamment:
- lesdites entrées d'air peuvent être alimentées en flux d'air à des températures différentes, ou au contraire en flux d'air à la même température
- des première et seconde entrées d'air peuvent être respectivement alimentées en flux d'air mélangé et en flux d'air froid par des première et une seconde sorties du dispositif de traitement d'air de l'installation. En variante, les première et seconde entrées d'air peuvent être alimentées en premier et second flux d'air mélangé.

Dans l'un ou l'autre cas, le flux d'air mélangé peut être un flux d'air traité thermiquement, l'expression "air traité thermiquement" désignant soit de l'air chaud délivré par un échangeur de chaleur chaud d'un dispositif de traitement d'air, soit de l'air froid délivré par un échangeur de chaleur froid, soit un mélange de ceux-ci, soit de l'air frais provenant de l'extérieur.

En variante, le flux d'air mélangé peut résulter d'un mélange, effectué dans une chambre de mixage d'un dispositif de traitement d'air, entre un flux d'air chaud, délivré par un échangeur de chaleur chaud, et un flux d'air froid, délivré par un échangeur de chaleur froid, le boîtier peut comporter au moins une première sortie alimentant un conduit de dégivrage et au moins une seconde sortie alimentant un conduit d'aération.

Dans ce cas les moyens de distribution peuvent comprendre au moins un élément, par exemple un volet de type tambour, chargé de contrôler l'accès aux sorties.

En variante les moyens de distribution peuvent comprendre deux volets chargés de contrôler respectivement l'accès à deux sorties, le boîtier peut comporter au moins une troisième sortie alimentant un conduit d'aération douce.

Dans ce cas, les moyens de distribution peuvent comprendre un volet chargé de contrôler l'accès à la troisième sortie.

En variante, les moyens de distribution peuvent comprendre un premier volet chargé de contrôler l'accès à la première sortie et un second volet, par exemple de type tambour, chargé de contrôler l'accès aux seconde et troisième sorties, le boîtier peut comporter au moins une quatrième sortie alimentant un conduit d'alimentation pieds. Dans ce cas, les moyens de distribution comprennent un volet chargé de contrôler l'accès à la quatrième sortie. Ce volet est alors préférentiellement installé juste après (ou en aval de) la première entrée, et il est par exemple de type tambour, le boîtier peut comporter une chambre de mixage alimentée par les première et seconde entrées et chargée d'alimenter au moins les première et/ou seconde et/ou troisième sorties, sous le contrôle des moyens de distribution.

Dans ce cas, la chambre de mixage peut également alimenter la quatrième sortie (pieds). Le volet contrôlant l'accès à la quatrième sortie contrôle alors également l'accès à une partie au moins de la chambre de mixage.

L'invention concerne également une installation de ventilation, chauffage et/ou climatisation d'un habitacle, notamment de véhicule automobile, comprenant au moins un dispositif de traitement d'air raccordé à au moins un dispositif de distribution d'air du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique, dans une vue en perspective, un premier exemple de réalisation d'un dispositif de distribution d'air d'une installation de ventilation, chauffage et/ou climatisation de véhicule automobile, selon l'invention,
- la figure 2 est une première vue en perspective éclatée du dispositif de distribution d'air de la figure 1,
- la figure 3 est une seconde vue en perspective éclatée du dispositif de distribution d'air de la figure 1,
- la figure 4 illustre de façon schématique, dans une vue en coupe transversale partielle, un exemple de réalisation d'une partie d'un dispositif de traitement d'air d'une installation de dispositif de ventilation, chauffage et/ou climatisation de véhicule automobile, dédiée au mixage d'air froid et d'air chaud et raccordée au dispositif de distribution d'air de la figure 1,
- la figure 5 illustre de façon schématique, dans une vue en coupe transversale partielle, un exemple de réalisation d'une partie d'un dispositif de traitement d'air d'une installation de dispositif de ventilation, chauffage et/ou climatisation de véhicule automobile, dédiée à la génération d'air froid et raccordée au dispositif de distribution d'air de la figure 1, et
- la figure 6 illustre de façon schématique, dans une vue en perspective, un second exemple de réalisation d'un dispositif de distribution d'air d'une installation de ventilation, chauffage et/ou climatisation de véhicule automobile, selon l'invention.

Les dessins annexés pourront non seulement servir à compléter l'invention, mais aussi contribuer à sa définition, le cas échéant.

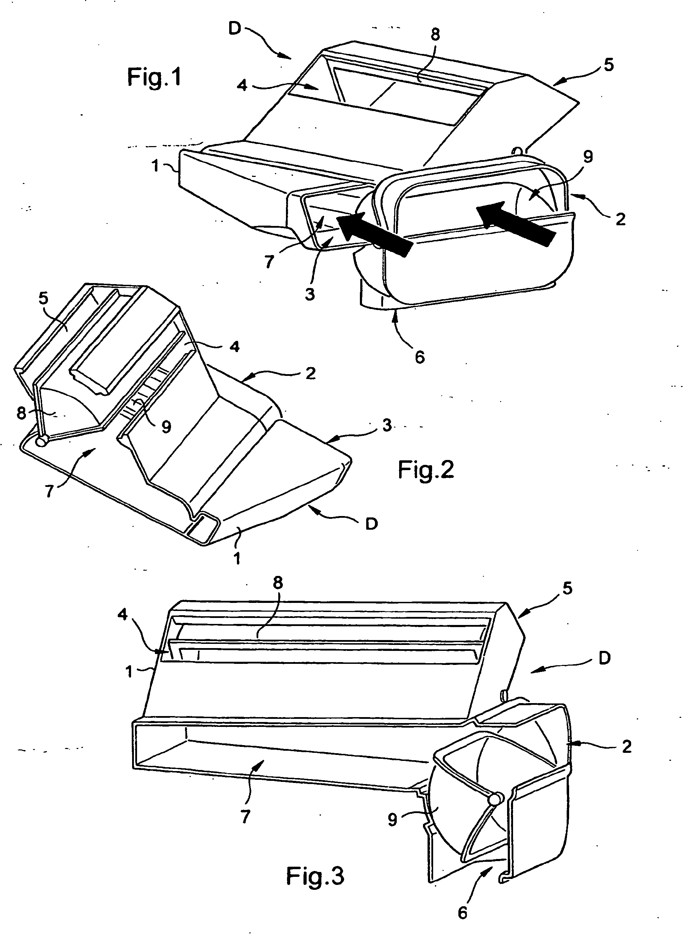

On se réfère tout d'abord aux figures 1 à 5 pour décrire un premier mode de réalisation d'un dispositif de distribution d'air pour une installation modulaire de ventilation, chauffage et/ou climatisation d'un habitacle de véhicule automobile.

Le dispositif (ou module) de distribution d'air selon l'invention est destiné à être raccordé soit directement, soit indirectement (par exemple par l'intermédiaire de conduits), à un dispositif (ou module) de traitement d'air (ou encore module thermique). Grâce à un tel agencement, le dispositif de distribution d'air selon l'invention peut être installé en tout endroit adapté d'un véhicule automobile, en fonction de la place disponible.

Un module de traitement d'air, par exemple d'une installation de climatisation, est généralement constitué d'un boîtier délimitant un conduit d'alimentation en flux d'air froid et un conduit d'alimentation en flux d'air chaud, tous deux alimentés en air frais ou recirculé. Le conduit d'alimentation en flux d'air froid est généralement équipé d'un échangeur de chaleur froid, tandis que le conduit d'alimentation en flux d'air chaud, également appelé conduit de chauffage, loge un radiateur de chauffage parcouru par un liquide chaud, qui est par exemple le liquide servant au refroidissement du moteur du véhicule. Il est possible par ailleurs de disposer d'un élément de chauffage électrique agissant en combinaison avec le radiateur de chauffage.

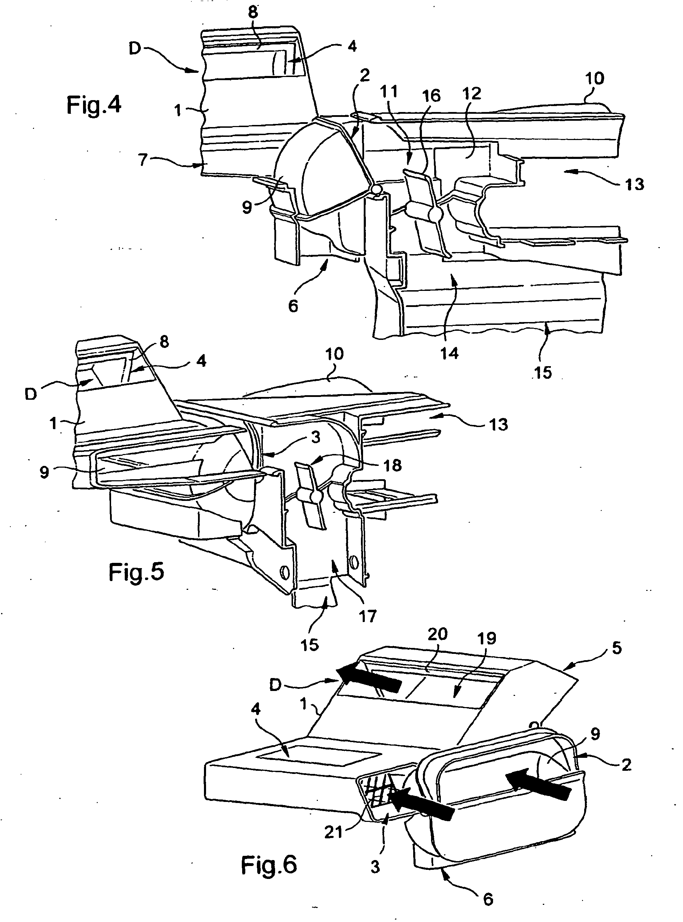

Le boîtier de traitement délimite une chambre de traitement d'air, également appelée chambre de mixage, alimentée de façon contrôlée en air froid et en air chaud par les conduits d'alimentation en flux d'air froid et en flux d'air chaud, et munie d'au moins une sortie d'air traité comme on le verra plus loin en référence à la figure 5. Le conduit d'air froid alimente également une sortie d'air froid formée dans le boîtier de traitement.

Les accès à la chambre de mixage et aux sorties d'air froid et d'air chaud peuvent être classiquement contrôlés, comme on le verra plus loin en référence aux figures 4 et 5, par des moyens de distribution tels que des volets de type tambour, drapeau ou papillon.

Le module (ou dispositif) de distribution d'air D, illustré à titre d'exemple sur les figures 1 à 3, comprend un boîtier 1 muni d'au moins deux entrées d'air 2 et 3 destinées, ici, à être respectivement alimentées en flux d'air mélangé et en flux d'air froid par les sorties d'air mélangé et d'air froid du module de traitement d'air.

Le boîtier de distribution 1 comporte également, en des endroits choisis de ses parois, au moins deux sorties de distribution d'air alimentant des conduits (non représentés) débouchant au niveau de bouches de distribution (non représentées) de l'habitacle.

Dans l'exemple illustré, non limitatif, le boîtier de distribution 1 comporte, d'une première part, une première sortie 4 (ou sortie de dégivrage) destinée à alimenter en air traité un conduit alimentant des bouches de dégivrage placées dans la planche de bord du véhicule, par exemple à la base du pare-brise, d'une deuxième part, une deuxième sortie 5 (ou sortie d'aération) destinée à alimenter en air traité un conduit alimentant des bouches d'aération (ou ventilation) placées en position médiane dans ladite planche de bord, et d'une troisième part, une troisième sortie 6 (ou sortie pieds) destinée à alimenter en air traité un conduit alimentant des bouches d'aération (ou ventilation) placées au niveau des pieds des passagers.

Les parois du boîtier de distribution 1 délimitent également une chambre de mixage 7 alimentée par les première 2 et seconde 3 entrées d'air, et communiquant avec les sorties de dégivrage 4 et d'aération 5. La chambre de mixage 7 pourrait également communiquer avec la sortie pieds 6, mais, dans l'exemple illustré, non limitatif, cette sortie pieds 6 est formée au voisinage immédiat de la première entrée 2, en amont de ladite chambre de mixage 7. Cela permet à l'installation d'offrir un mode de fonctionnement combiné dans lequel la température de l'air délivré au niveau des bouches d'alimentation pieds est supérieure ou égale à celle de l'air délivré aux autres bouches de sortie du module.

La chambre de mixage 7 peut également comporter une cloison de séparation partant de la seconde entrée 3 et se terminant dans une partie aval préférentiellement au voisinage d'une des sorties du module. Cela permet à l'installation d'offrir un mode de fonctionnement dans lequel l'air froid alimente préférentiellement au moins une sortie du module.

Le boîtier de distribution 1 comporte enfin, en des endroits choisis, des moyens de distribution chargés de répartir les flux d'air froid et mélangé entre ses différentes sorties 4, 5 et 6.

Dans l'exemple illustré sur les figures 1 à 3, les moyens de distribution sont réalisés sous la forme d'au moins deux volets.

Un premier volet 8, ici de type tambour, est installé entre les sorties de dégivrage 4 et d'aération 5. Ainsi, le volet tambour 8 peut, lorsqu'il est entraîné en rotation, passer d'une première position d'extrémité (voir figure 1) dans laquelle il libère complètement l'accès à la sortie de dégivrage 4 et interdit complètement l'accès à la sortie d'aération 5, à une ou plusieurs positions d'extrémité (voir figure 2) dans lesquelles il libère partiellement l'accès aux sorties de dégivrage 4 et d'aération 5, dans des proportions choisies, et enfin à une seconde position d'extrémité (voir figure 3) dans laquelle il libère complètement l'accès à la sortie d'aération 5 et interdit complètement l'accès à la sortie de dégivrage 4.

Bien entendu, dans des variantes de réalisation le volet tambour 8 pourrait être remplacé par un volet drapeau ou un volet papillon, ou bien par deux volets drapeau et/ou papillon.

Un second volet 9, ici de type tambour, est installé au voisinage immédiat de la première entrée 2 (en aval de celle-ci mais en amont de la chambre de mixage 7) afin de contrôler l'accès du flux d'air mélangé à la chambre de mixage 7 et à la sortie pieds 6. Ainsi, le volet tambour 9 peut, lorsqu'il est entraîné en rotation, passer d'une première position d'extrémité (voir figure 1) dans laquelle il libère complètement l'accès du flux d'air mélangé à la sortie pieds 6 et interdit complètement l'accès dudit flux d'air mélangé à la chambre de mixage 7, à une ou plusieurs positions d'extrémité (voir figure 3) dans lesquelles il libère partiellement l'accès du flux d'air mélangé à la sortie pieds 6 et à la chambre de mixage 7, dans des proportions choisies, et enfin à une seconde position d'extrémité dans laquelle il libère complètement l'accès du flux d'air mélangé à la chambre de mixage 7 et interdit complètement l'accès de ce flux à la sortie pieds 6.

Bien entendu, dans des variantes de réalisation le volet tambour 9 pourrait être remplacé par un volet drapeau ou un volet papillon, ou bien par deux volets drapeau et/ou papillon.

Un dispositif complémentaire peut être éventuellement installé en aval de l'entrée d'air 3 dans un mode de réalisation particulier. Cela permet d'établir une stratification de température entre les pieds et les zones de dégivrage plus faible que celle établie entre les pieds et les zones d'aération.

Inversement, dans un autre mode de réalisation particulier, cela permet d'établir une stratification de température entre les pieds et les zones d'aération plus faible que celle établie entre les pieds et les zones de dégivrage.

En variante, ce dispositif peut dévier en outre partiellement le flux d'air provenant de l'entrée d'air 3. Cela permet ainsi de privilégier l'alimentation d'au moins une des sorties du module avec un flux d'air provenant de l'entrée d'air 3 lorsqu'au moins trois des sorties sont ouvertes.

Des moyens de distribution complémentaires peuvent être prévus dans le boîtier de distribution 1. Ainsi, on peut utiliser un volet pour contrôler l'accès à la chambre de mixage 7 de l'air froid provenant de la seconde entrée 3. Cette situation est plus particulièrement adaptée au cas évoqué précédemment dans lequel le boîtier de distribution 1 comporte une cloison de séparation de flux. De plus, les proportions des flux d'air froid et flux d'air mélangé, qui alimentent respectivement les seconde 3 et première 2 entrées du boîtier de distribution 1, peuvent être gérées directement au niveau du module de traitement d'air 10, comme illustré, à titre d'exemple non limitatif, sur les figures 4 et 5.

Plus précisément, dans l'exemple illustré sur la figure 4, le module de traitement 10 comporte une première partie dédiée au mélange d'air froid et d'air chaud. Cette première partie comporte une chambre de mixage 11 communiquant avec la sortie 12 du conduit de réchauffage 13 et avec une première sortie 14 du conduit d'air froid 15. L'accès du flux d'air froid à la chambre de mixage 11 est ici géré par un volet 16 par exemple de type papillon (mais il pourrait s'agir d'un volet de type drapeau). Il est ainsi possible de gérer la température de l'air mélangé qui alimente la première entrée 2 du module de distribution D.

Par ailleurs, dans l'exemple illustré sur la figure 5, le module de traitement 10 comporte une seconde partie dédiée au contrôle de l'accès d'une partie au moins du flux d'air froid à la seconde entrée 3 du dispositif de distribution D. Cette seconde partie prolonge, par exemple, une partie d'extrémité du conduit d'air froid 15. Elle comporte une entrée communiquant avec une seconde sortie 17 du conduit d'air froid 15 et un volet 18, ici de type papillon à titre d'exemple, contrôlant l'accès du flux d'air froid, provenant de la seconde sortie 17, à la seconde entrée 3 du dispositif de distribution D. En fonction de la position du volet 18, on peut injecter plus ou moins d'air froid dans la chambre de mixage 7 du module de distribution D, et par conséquent gérer les proportions respectives d'air froid et d'air mélangé qui alimentent cette chambre de mixage 7. Cela permet également, lorsque le module de distribution D est agencé à cet effet, d'acheminer en des endroits choisis éventuellement différents tout ou partie de l'air froid et de l'air mélangé afin d'offrir une stratification de température entre les différentes sorties 4, 5 et 6.

On se réfère maintenant à la figure 6 pour décrire une variante du module de distribution D décrit précédemment en référence aux figures 1 à 5.

Ce qui différencie cette variante de réalisation de la précédente, c'est le nombre de sorties et leurs positions respectives au sein du boîtier de distribution 1. Ici, on prévoit en complément des sorties de dégivrage 4, d'aération 5 et pieds 6, une sortie 19 destinée à alimenter en air traité un conduit alimentant des bouches de diffusion douce placées dans la planche de bord du véhicule. Ces bouches de diffusion douce sont destinées à diffuser le flux d'air traité qui leur parvient selon une intensité sensiblement constante, quel que soit le débit dudit flux.

Un volet 20, ici de type tambour, est installé entre les sorties de diffusion douce 19 et d'aération 5. Ainsi, le volet tambour 20 peut, lorsqu'il est entraîné en rotation, passer d'une première position d'extrémité dans laquelle il libère complètement l'accès à la sortie de diffusion douce 19 et interdit complètement l'accès à la sortie d'aération 5, à une ou plusieurs positions intermédiaires dans lesquelles il libère partiellement l'accès aux sorties de diffusion douce 19 et d'aération 5, dans des proportions choisies, notamment une position dans laquelle il libère complètement l'accès à la sortie d'aération 5 et interdit complètement l'accès à la sortie de diffusion douce 19, et enfin à une seconde position d'extrémité dans laquelle il ferme complètement à la sortie d'aération 5 et la sortie de diffusion douce 19.

Bien entendu, dans des variantes de réalisation le volet tambour 20 pourrait être remplacé par un volet drapeau ou un volet papillon, ou bien par deux volets drapeau et/ou papillon.

Enfin, l'accès à la sortie de dégivrage 4 est contrôlé par un volet 21, par exemple de type papillon.

L'invention ne se limite pas aux modes de réalisation de dispositif de distribution d'air et d'installation de ventilation, chauffage et/ou climatisation décrits ci-avant, seulement à titre d'exemple, mais elle englobe toutes les variantes que pourra envisager l'homme de l'art dans le cadre des revendications ci-après.

Ainsi, dans ce qui précède on a décrit des exemples de réalisation d'un dispositif (ou module) de distribution d'air dont les première et seconde entrées d'air sont respectivement alimentées par les sorties d'air mélangé et d'air froid d'un unique dispositif (ou module) de traitement d'air. Mais, le dispositif (ou module) de distribution d'air peut comporter des première et seconde entrées d'air respectivement alimentées par les sorties d'air mélangé de deux dispositifs (ou module) de traitement d'air distincts. Les entrées d'air peuvent par ailleurs être alimentées en air à des températures quelconques.

Par ailleurs, dans ce qui précède on a décrit des exemples de réalisation d'un dispositif (ou module) de distribution d'air muni seulement de deux entrées d'air. Mais, on peut envisager des variantes dans lesquelles le dispositif de distribution d'air comporte plus de deux entrées d'air, éventuellement alimentées par plusieurs dispositifs de traitement d'air.

En outre, dans ce qui précède on a décrit des exemples de réalisation d'un dispositif (ou module) de distribution d'air comprenant un boîtier de distribution de forme allongée et relativement aplatie. Mais, le boîtier de distribution peut prendre n'importe quelle autre forme, et notamment une forme sensiblement cylindrique. Dans ce cas, les différentes sorties sont réparties sur les parois latérales et les moyens de distribution comprennent au moins un volet gérant conjointement l'accès auxdites sorties.

De plus, dans ce qui précède on a décrit un exemple de réalisation d'une installation de ventilation, chauffage et/ou climatisation comportant un unique dispositif (ou module) de traitement d'air raccordé à un unique dispositif (ou module) de distribution d'air. Mais, l'installation peut comporter un unique dispositif (ou module) de traitement d'air raccordé à au moins deux dispositifs (ou modules) de distribution d'air, ou bien plusieurs dispositifs (ou modules) de traitement d'air raccordés à plusieurs dispositifs (ou modules) de distribution d'air.

En outre, un module selon l'invention peut alimenter en air non seulement la zone avant d'un véhicule, comme décrit, mais également la zone arrière.

## Revendications

1. Dispositif de distribution d'air (D) pour une installation modulaire de ventilation, chauffage et/ou climatisation d'un habitacle, notamment de véhicule automobile, comprenant un boîtier (1) muni d'au moins deux entrées d'air (2, 3), propres à être alimentées en flux d'air par au moins un dispositif de traitement d'air (10) de ladite installation, d'au moins une sortie de distribution d'air (4-6, 19) et de moyens de distribution (8, 9; 20, 21), agencés pour répartir lesdits flux d'air entre lesdites sorties de distribution d'air (4-6, 19), **caractérisé en ce que** le dispositif est réalisé sous la forme d'un module.

2. Dispositif selon la revendication 1, **caractérisé en ce que** lesdites entrées d'air (2, 3) sont propres à être alimentées en flux d'air à des températures différentes.

3. Dispositif selon la revendication 1, **caractérisé en ce que** lesdites entrées d'air (2, 3) sont propres à être alimentées en flux d'air à la même température.

4. Dispositif selon l'une des revendications 1 à 3, **caractérisé en ce qu'**il comprend une première (2) et une seconde (3) entrées d'air propres à être respectivement alimentées en flux d'air mélangé et en flux d'air froid par une première et une seconde sorties dudit dispositif de traitement d'air (10) de l'installation.

5. Dispositif selon la revendication 1, **caractérisé en ce qu'**il comprend une première (2) et une seconde (3) entrées d'air propres à être alimentées en premier et second flux d'air mélangé.

6. Dispositif selon l'une des revendications 4 et 5, **caractérisé en ce que** ledit flux d'air mélangé est un flux d'air traité thermiquement.

7. Dispositif selon l'une des revendications 1 à 6, **caractérisé en ce que** lesdits moyens de distribution comprennent au moins un élément (8) destiné à contrôler l'accès auxdites sorties.

8. Dispositif selon la revendication 7, **caractérisé en ce que** ledit volet (8) est de type tambour.

9. Dispositif selon l'une des revendications 1 à 8, **caractérisé en ce que** lesdits moyens de distribution comprennent deux volets destinés à contrôler respectivement l'accès à deux sorties (4, 5).

10. Dispositif selon l'une des revendications 1 à 9, **caractérisé en ce que** ledit boîtier (1) comporte au moins une troisième sortie (19) destinée à alimenter un conduit d'aération douce.

11. Dispositif selon la revendication 10, **caractérisé en ce que** lesdits moyens de distribution comprennent un volet (20) destiné à contrôler l'accès à ladite troisième sortie (19).

12. Dispositif selon la combinaison des revendications 6 et 10, **caractérisé en ce que** lesdits moyens de distribution comprennent un premier volet (21) destiné à contrôler l'accès à ladite première sortie (4) et un second volet (20) destiné à contrôler l'accès auxdites seconde (5) et troisième (19) sorties.

13. Dispositif selon la revendication 12, **caractérisé en ce que** ledit second volet (20) est de type tambour.

14. Dispositif selon l'une des revendications 1 à 13, **caractérisé en ce que** ledit boîtier (1) comporte au moins une quatrième sortie (6) destinée à alimenter un conduit d'alimentation pieds, et **en ce que** lesdits moyens de distribution comprennent un volet (9) destiné à contrôler l'accès à ladite quatrième sortie (6).

15. Dispositif selon la revendication 14, **caractérisé en ce que** ledit volet (9) est installé juste après ladite première entrée (2).

16. Dispositif selon la revendication 15, **caractérisé en ce que** ledit volet (9) est de type tambour.

17. Dispositif selon l'une des revendications 1 à 16, **caractérisé en ce que** ledit boîtier (1) comporte une chambre de mixage (7) alimentée par lesdites première (2) et seconde (3) entrées et destinée à alimenter au moins lesdites première (4) et/ou seconde (5) et/ou troisième (19) sorties, sous contrôle desdits moyens de distribution (20, 21).

18. Dispositif selon la revendication 17 en combinaison avec l'une des revendications 14 à 16, **caractérisé en ce que** ladite chambre de mixage (7) est destinée à alimenter ladite quatrième sortie (6).

19. Dispositif selon la revendication 18 en combinaison avec l'une des revendications 15 et 16, **caractérisé en ce que** ledit volet (9) contrôle l'accès à ladite quatrième sortie (6) et à une partie au moins de ladite chambre de mixage (7).

20. Installation de ventilation, chauffage et/ou climatisation d'un habitacle, notamment de véhicule automobile, **caractérisée en ce qu'**elle comprend au moins un dispositif de traitement d'air (10) raccordé à au moins un dispositif de distribution d'air (D) selon l'une des revendications précédentes.

## Claims

1. Air distribution device (D) for a modular installation for ventilating, heating and/or air conditioning of a vehicle compartment, in particular that of an automobile vehicle, comprising a housing (1) equipped with at least two air inlets (2, 3), capable of being supplied with an airflows by at least one air treating device (10) of said installation, of at least one air distribution outlet (4-6, 19) and distribution means (8, 9, 20, 21), arranged out so that said airflows are shared between the air distribution outlets (4-6, 19) **characterised in that** the device is made in the form of a module.

2. Device of claim 1, **characterised in that** said air intakes (2, 3) are capable of being supplied with airflows with different temperatures.

3. Device of claim 1, **characterised in that** said air intakes (2, 3) are capable of being supplied with airflows at the same temperature.

4. Device of any of claims 1 to 3, **characterised in that** it comprises a first (2) and a second (3) air intakes capable of being respectively supplied with a mixed air flow and a cold airflow by first and second outlets of said air processing device (10) of the installation.

5. Device of claim 1, **characterised in that** it comprises a first (2) and a second (3) air intakes capable of being supplied with a first and second mixed airflow.

6. Device of any of claims 4 or 5, **characterised in that** said mixed air flow is a thermally treated airflow.

7. Device of any of claims 1 to 6, **characterised in that** said distribution means comprise at least one element (8) designed to control the access to said outlets.

8. Device of claim 7, **characterised in that** said flap (8) is of the drum type.

9. Device of any of claims 1 to 8, **characterised in that** said distribution means comprise at least two flaps designed to control respectively the access to the two outlets (4, 5).

10. Device of any of claims 1 to 9, **characterised in that** said housing (1) comprises at least one third outlet (19) designed to supply a soft ventilation duct.

11. Device of claim 10, **characterised in that** said distribution means comprise a flap (20) designed to control access to said third outlet (19).

12. Device of a combination of claims 6 and 10, **characterised in that** said distribution means comprise a first flap (21) designed to control the access to said first outlet (4) and a second flap (20) designed to control the access to said second (5) and third (19) outlets.

13. Device of claim 12, **characterised in that** said second flap (20) is of the drum type.

14. Device of any of claims 1 to 13, **characterised in that** said housing (1) comprises at least one fourth outlet (6) designed to supply a foot supply duct, and **in that** said distribution means comprise a flap (9) designed to control the access to said fourth outlet (6).

15. Device of claim 14, **characterised in that** said flap (9) is installed just after said first intake (2).

16. Device of claim 15, **characterised in that** said flap (9) is of the drum type.

17. Device of any of claims 1 to 16, **characterised in that** said housing (1) comprises a mixing chamber (7) supplied by said first (2) and second (3) intakes and is designed to supply at least said first (4) and second (5) and/or third (19) outlets, under the control of said distribution means (20, 21).

18. Device of claim 17, in combination with one of the claims 14 to 16, **characterised in that** said mixing chamber (7) is designed to supply said fourth outlet (6).

19. Device of claim 18, in combination with one of the claims 15 and 16, **characterised in that** said flap (9) controls the access to the fourth outlet (6) and to at least one part of said mixing chamber (7).

20. Installation for ventilating, heating and/or air conditioning a cockpit, in particular that of an automobile vehicle, **characterised in that** it comprises at least one air processing device (10) connected to at least one air distribution device (D) of one of the previous claims.

## Patentansprüche

1. Vorrichtung zur Luftverteilung (D) für eine modulare Anlag zur Lüftung, Heizung und/oder Klimatisierung eines Fahrerhauses, insbesondere eines Kraftfahrzeugs, die ein Gehäuse (1) umfasst, das mindestens mit zwei Lufteinlässen (2, 3) ausgerüstet ist, die mit einem Luftfluss beschickt werden können, durch mindestens eine Vorrichtung zur Luftaufbereitung (10) der besagten Anlage, mit mindestens einem Ausgang zur Luftverteilung (4-6, 19) und mit Verteilungsmitteln (8, 9; 20, 21), die angeordnet sind, um die besagten Luftflüsse zwischen den besagten Ausgängen zur Luftverteilung (4-6, 19) zu verteilen, **dadurch gekennzeichnet, dass** das Vorrichtungsgehäuse in Form eines Moduls hergestellt wurde.

2. Vorrichtung gemäß Anspruch 1, **dadurch gekennzeichnet, dass** die besagten Lufteinlässe (2, 3) bei unterschiedlichen Temperaturen mit einem Luftfluss beschickt werden können.

3. Vorrichtung gemäß Anspruch 1, **dadurch gekennzeichnet, dass** die besagten Lufteinlässe (2, 3) bei der gleichen Temperatur mit einem Luftfluss beschickt werden können.

4. Vorrichtung gemäß einem der Ansprüche 1 bis 3, **dadurch gekennzeichnet, dass** sie einen ersten (2) und einen zweiten (3) Lufteinlass umfasst, die entsprechend durch einen ersten und einen zweiten Ausgang der besagten Vorrichtung zur Luftaufbereitung (10) der Anlage mit einem gemischten Luftfluss und einem Kaltluftfluss beschickt werden können.

5. Vorrichtung gemäß Anspruch 1, **dadurch gekennzeichnet, dass** sie einen ersten (2) und einen zweiten (3) Lufteinlass umfasst, der mit einem ersten und einem zweiten gemischten Luftfluss beschickt werden kann.

6. Vorrichtung gemäß einem der Ansprüche 4 und 5, **dadurch gekennzeichnet, dass** es sich bei dem besagten gemischten Luftfluss um einen thermisch behandelten Luftfluss handelt.

7. Vorrichtung gemäß einem der Ansprüche 1 bis 6, **dadurch gekennzeichnet, dass** die besagten Mittel zur Verteilung mindestens ein Element (8) umfassen, das zur Kontrolle des Zugangs zu den besagten Ausgängen dient.

8. Vorrichtung gemäß Anspruch 7, **dadurch gekennzeichnet, dass** die besagten Klappe (8) eine Trommel ist.

9. Vorrichtung gemäß einem der Ansprüche 1 bis 8, **dadurch gekennzeichnet, dass** die besagten Mittel zur Verteilung zwei Klappen umfassen, die jeweils zur Kontrolle des Zugangs zu den beiden Ausgängen (4, 5) dienen.

10. Vorrichtung gemäß einem der Ansprüche 1 bis 9, **dadurch gekennzeichnet, dass** das besagte Gehäuse (1) mindestens einen dritten Ausgang (19) umfasst, der zur Beschickung einer Leitung zur weichen Lüftung dient.

11. Vorrichtung gemäß Anspruch 10, **dadurch gekennzeichnet, dass** die besagten Mittel zur Verteilung eine Klappe (20) umfassen, die zur Kontrolle des Zugangs zu dem dritten Ausgang (19) dient.

12. Vorrichtung gemäß der Kombination der Ansprüche 6 und 10, **dadurch gekennzeichnet, dass** die besagten Mittel zur Verteilung eine erste Klappe (21) umfassen, die zur Kontrolle des Zugangs zu dem besagten ersten Ausgang (4) dienen und eine zweite Klappe (20), die zur Kontrolle des Zugangs zu dem besagten zweiten (5) und dritten (19) dienen.

13. Vorrichtung gemäß Anspruch 12, **dadurch gekennzeichnet, dass** die besagte zweite Klappe (20) eine Trommel ist.

14. Vorrichtung gemäß einem der Ansprüche 1 bis 13, **dadurch gekennzeichnet, dass** das besagte Gehäuse (1) mindestens einen vierten Ausgang (6) umfasst, der zur Beschickung einer Leitung zur Versorgung der Füße dient und **dadurch**, dass die besagten Mittel zur Verteilung eine Klappe (9) umfassen, die zur Kontrolle des Zugangs zu dem besagten vierten Ausgang (6) dient.

15. Vorrichtung gemäß Anspruch 14, **dadurch gekennzeichnet, dass** die besagte Klappe (9) genau nach dem besagten ersten Eingang (2) installiert ist.

16. Vorrichtung gemäß Anspruch 15, **dadurch gekennzeichnet, dass** die besagte Klappe (9) eine Trommel ist.

17. Vorrichtung gemäß einem der Ansprüche 1 bis 16, **dadurch gekennzeichnet, dass** das besagte Gehäuse (1) eine Mischkammer (7) umfasst, die von dem besagten ersten (2) und zweiten (3) Eingang beschickt wird und zumindest zur Versorgung des besagten ersten (4) und/oder zweiten (5) und/oder dritten (19) Ausgangs dient, unter Kontrolle der besagten Mittel zur Verteilung (20, 21).

18. Vorrichtung gemäß Anspruch 17 in Kombination mit einem der Ansprüche 14 bis 16, **dadurch gekennzeichnet, dass** die besagte Mischkammer (7) zur Beschickung des besagten vierten Ausgangs (6) dient.

19. Vorrichtung gemäß Anspruch 18 in Kombination mit einem der Ansprüche 15 und 16, **dadurch gekennzeichnet, dass** die besagte Klappe (9) den Zugang zu dem besagten vierten Ausgang (6) kontrolliert und zumindest zu einem Teil der besagten Mischkammer (7).

20. Lüftungs-, Heizungs- und/oder Klimaanlage eines Fahrerhauses, insbesondere eines Kraftfahrzeugs, **dadurch gekennzeichnet, dass** sie mindestens eine Vorrichtung zur Luftaufbereitung (10) umfasst, die an mindestens eine Vorrichtung zur Verteilung der Luft (D) angeschlossen ist, gemäß einem der vorherigen Ansprüche.
